Europäisches Patentamt

**European Patent Office**

Office européen des brevets

(11) Numéro de publication: **0 134 176**
**A1**

(12) # DEMANDE DE BREVET EUROPEEN

(21) Numéro de dépôt: **84401658.4**

(22) Date de dépôt: **09.08.84**

(51) Int. Cl.⁴: **F 25 B 15/10**, F 25 B 33/00

(30) Priorité: **11.08.83 ES 525318**
**11.08.83 ES 525319**
**11.08.83 ES 525320**

(43) Date de publication de la demande: **13.03.85**
**Bulletin 85/11**

(84) Etats contractants désignés: **AT BE CH DE FR GB IT LI LU NL SE**

(71) Demandeur: **Garcia Sesen, Antonio, Ronda Guinardo, 2-6-2a, Barcelona (ES)**
Demandeur: **Martin, René, 77 boulevard Montparnasse, F-75006 Paris (FR)**

(72) Inventeur: **Garcia, Sesen Antonio, Ronda Guinardo 2-6-2a, Barcelona (ES)**

(74) Mandataire: **Portal, Gérard et al, Cabinet Z. Weinstein 20, Avenue de Friedland, F-75008 Paris (FR)**

(54) **Procédé et dispositif d'amélioration de la circulation d'un fluide dans des appareils frigorifiques à absorption.**

(57) L'invention concerne un procédé et un dispositif d'amélioration de la circulation dans un sens déterminé d'un fluide, de préférence à fonction réfrigérante, d'un appareil frigorifique à absorption.

Le dispositif pour améliorer la circulation dans un sens déterminé de ce fluide, de préférence à fonction réfrigérante, circulant tout d'abord essentiellement en phase liquide dans un circuit, de préférence à fonction réfrigérante d'un appareil frigorifique à absorption, et subissant en un point donné (1) dudit circuit au moins partiellement un changement de phase en produisant au moins partiellement une phase vapeur, est caractérisé en ce qu'il comprend, en amont dudit point de changement de phase, des moyens (18) réduisant la section dudit circuit limitant le passage dudit fluide en phase liquide de manière à empêcher la circulation à contresens ou en retour du fluide liquide en favorisant ainsi une circulation préférentielle dans le sens déterminé souhaité. Ces moyens (18) réduisant la section du circuit sont de préférence formés par au moins un étranglement (20) du circuit en un point donné, définissant de préférence un orifice calibré.

L'invention, en améliorant la circulation du fluide de préférence réfrigérant, permet d'accroître de manière radicale le rendement thermique de manière telle que les appareils de réfrigération à absorption deviennent compétitifs par rapport à des appareils réfrigérants à compression et détente.

1

"Procédé et dispositif d'amélioration de la circulation dans un sens déterminé d'un fluide, de préférence à fonction réfrigérante, circulant dans un circuit, de préférence à fonction réfrigérante dans un appareil frigorifique à absorption, et subissant en un point donné de ce circuit au moins partiellement un changement de phase".

La présente invention concerne essentiellement un procédé et dispositif d'amélioration de la circulation dans un sens déterminé d'un fluide, de préférence à fonction réfrigérante, circulant dans un circuit, de préférence à fonction réfrigérante dans un appareil frigorifique à absorption, et subissant en un point donné de ce circuit au moins partiellement un changement de phase. La présente invention est plus particulièrement applicable aux appareils frigorifiques à absorption produisant une basse température, et constituant ainsi notamment des réfrigérateurs ou congélateurs de type ménager.

Jusqu'à présent, il n'a pas été possible de construire d'équipements de réfrigération à absorption fonctionnant à de très basses températures, en particulier des congélateurs profonds, ceci en raison de certaines limitations physiques qui résultent notamment de la trop faible différence de pression existant entre les colonnes respectivement ascendante et descendante.

D'autre part, dans ces appareils frigoriques à absorption, le fluide réfrigérant utilisé comprend un composant actif capable de subir alternativement un changement de phase liquide en phase vapeur. De tels appareils comportent en pratique toujours une partie de circuit où ce composant actif doit subir un changement de phase, cette partie de circuit se comportant comme une thermopompe qui utilise ce changement de phase pour faire monter le fluide réfrigérant, en particulier le composant actif, d'un niveau donné à un niveau plus élevé.

Or, en pratique, la circulation du fluide subissant le changement de phase est limitée, au moment où se produit le changement de phase, par un phénomène de dilatation de la veine liquide dans les deux sens ce qui entraîne à son tour une perte de rendement de l'appareil. En outre, dans le cas particulier des appareils frigorifiques à absorption où le fonctionnement est conditionné par la désorption ou l'absorption alternative du composant actif, comme par exemple du $NH_3$, relativement à un composant liquide inerte, comme par exemple l'eau, il peut se produire au point de changement de phase du composant actif, un désorption complète du composant actif aboutissant à un arrêt de fonctionnement en thermopompe, et donc à un arrêt de circulation de la solution, l'appareil tombant alors en panne.

En outre, une autre limitation à la compétitivité des groupes ou appareils frigoriques à absorption réside dans le fait que leur construction exige l'exécution d'un nombre relativement considérable de soudures, ceci accroissant radicalement les prix de revient de

3    0134176

fabrication de ces appareils.

D'autre part, une autre exigence de ces appareils frigorifiques concerne leur compacité ainsi que leur rendement thermique qui doit être le meilleur possible.

Toutes ces exigences sont naturellement contradictoires
et tous ces problèmes techniques précédemment énoncés
n'ont pu être résolus jusqu'à présent individuellement ou en combinaison.

La présente invention a donc pour but de résoudre un
nouveau problème technique par   -
une solution permettant d'améliorer la circulation
du fluide réfrigérant des appareils frigorifiques à
absorption, et de manière plus générale   la circulation
d'un fluide circulant dans un sens déterminé et subissant au moins partiellement un changement de phase en
un point donné, de manière en particulier à améliorer
le rendement thermique de ces appareils tout en simplifiant
la technologie de ces appareils.

Ce nouveau problème technique ainsi que tout autre
problème technique qui sera apparent   à un homme
du métier   de   la description suivante est résolu
par la présente invention.

Ainsi, la présente invention fournit selon un premier
aspect un procédé d'amélioration de la circulation dans
un sens déterminé d'un fluide, de préférence à fonction réfrigérante, circulant tout d'abord essentiellement en phase liquide, dans un circuit, de préférence
à  fonction réfrigérante d'un appareil frigorifique à
absorption, et subissant en un point donné dudit circuit au moins partiellement   un changement de phase

en produisant au moins partiellement une phase vapeur, caractérisé en ce qu'on réalise, en amont du point de changement de phase, une réduction de la section dudit circuit limitant le passage dudit fluide en phase liquide de manière à empêcher la circulation en contre sens ou en retour du fluide liquide en favorisant ainsi une circulation préférentielle dans le sens déterminé souhaité.

Dans l'application particulièrement préférée des appareils de réfrigération à absorption, cette amélioration de la circulation du fluide réfrigérant améliore le rendement thermique.

D'autre part, grâce à l'amélioration de la circulation du fluide, on aboutit à un contrôle précis des débits et on minimise les fluctuations de courant de liquide, ce qui n'était pas possible auparavant. De surcroît on minimise également les risques de surchauffe au niveau du point de changement de phase qui dans les circuits frigorifiques peuvent aboutir à une évaporation complète du composant actif, comme par exemple le $NH_3$, et à l'arrêt de la circulation du fluide.

En outre, par l'amélioration de la circulation obtenue selon la présente invention, tout apport de chaleur peut être réalisé au point de changement de phase fonctionnant en thermopompe tout en pouvant varier dans de larges limites. Ainsi, la tolérance des appareils selon l'invention à une modification de l'apport de chaleur est tout à fait remarquable relativement aux appareils antérieurs où l'apport de chaleur ne pouvait être totalement réalisé au point de changement de phase fonctionnant en thermopompe et où il fallait utiliser un bouilleur annexe.

D'autre part, cette amélioration de la circulation du fluide réfrigérant permet d'utiliser une proportion de composants actifs beaucoup plus faible, par exemple de l'ordre de 5 à 10 % de $NH_3$, par rapport aux solutions précédentes utilisant au moins 30 % de $NH_3$ pour une sécurité de fonctionnement évitant l'arrêt de la thermopompe.

Selon une autre caractéristique de la présente invention le procédé précédent peut être encore amélioré de manière importante, en particulier dans le cas de fluide réfrigérant d'un appareil frigorifique à absorption dont le circuit de fluide réfrigérant comprend un absorbeur en position basse et un évaporateur en position haute reliés entre eux respectivement par un conduit descendant et un conduit ascendant, ce procédé étant alors caractérisé en ce qu'on modifie le circuit de fluide réfrigérant de manière à disposer l'évaporateur à un niveau intermédiaire ; et on introduit un étage de transfert intermédiaire entre l'évaporateur et l'absorbeur, comprenant un étage d'évaporation préliminaire du composant actif qui est disposé à un niveau plus élevé que l'évaporateur, et qui comprend un conduit reliant l'évaporateur audit conduit descendant, ledit étage d'évaporation préliminaire étant incliné en direction de l'évaporateur pour présenter un point culminant situé à l'opposé de l'évaporateur ; on introduit le composant actif sensiblement au voisinage de ce point culmimant de manière à ce qu'il s'écoule en direction de l'évaporateur, et avantageusement à sa température de saturation. De préférence, on réalise simultanément dans cet étage de transfert intermédiaire un échange thermique à contre-courant avec le fluide réfrigérant provenant de l'absorbeur.

Cette amélioration de circulation du fluide est telle que l'invention permet ainsi de réaliser des appareils frigorifiques à absorption fournissant une température de froid, qui ne pouvait pas être obtenue auparavant.

Selon une caractéristique particulière de ce procédé ainsi amélioré, l'étage d'évaporation préliminaire est à faible pente. D'autre part, le gaz inerte porteur, comme par exemple l'hydrogène, est conditionné de préférence pour l'amener au point de rosée à son arrivée à cet étage d'évaporation préliminaire.

Selon un autre aspect de la présente invention, la circulation du fluide réfrigérant est améliorée tandis que la technologie de construction de l'appareil est simplifiée, avec une amélioration du rendement thermique et une meilleure compacité des appareils, en réalisant la quasi totalité du circuit de fluide réfrigérant, incluant l'évaporateur et le condenseur, sous forme de deux corps tubulaires disposés l'un à l'intérieur de l'autre dans la direction longitudinale et qui sont agencés de manière à présenter des zones de contact communes, de préférence selon la direction longitudinale.

Selon une caractéristique avantageuse, on réalise la production de froid dans le corps tubulaire interne qui constitue la partie active de l'appareil en introduisant l'agent actif liquide dans ledit corps tubulaire interne.

Naturellement, la présente invention concerne également pour chacun de ces aspects précédents un dispositif permettant la mise en oeuvre du procédé précédemment défini.

Ainsi, la présente invention concerne aussi un dispositif d'amélioration de la circulation dans un sens déterminé d'un fluide, de préférence à fonction réfrigérante, circulant tout d'abord essentiellement en phase liquide, dans un circuit, de préférence à fonction réfrigérante d'un appareil frigorifique à absorption, et subissant en un point donné dudit circuit au moins partiellement un changement de phase, en produisant au moins partiellement une phase vapeur, caractérisé en ce qu'il comprend des moyens réduisant la section dudit circuit limitant le passage dudit fluide en phase liquide de manière à empêcher la circulation en contre sens ou en retour du fluide liquide en favorisant ainsi une circulation préférentielle dans le sens déterminé souhaité.

Selon un mode de réalisation particulier, ces moyens réduisant la section sont formés par au moins un étranglement dudit circuit en un point donné, avantageusement définissant un orifice calibré.

Selon un mode de réalisation particulier, cet étranglement peut s'étendre sur une longueur de circuit déterminée. De préférence, cet étranglement peut comprendre un tube capillaire intégré au circuit.

Selon une autre variante de réalisation, les moyens précités comprennent au moins deux étranglements voisins, longitudinalement décalés entre lesquels est logé un élément formant bille, l'un des étranglements étant prévu pour constituer un siège de l'élément formant bille pour interdire la circulation de fluide à contre-courant.

Selon un mode de réalisation particulier, l'orifice calibré précité est défini dans une plaque solidaire du conduit, et de préférence au niveau de l'admission du fluide dans le conduit, en particulier depuis une réserve de fluide.

D'autre part, en particulier dans le cas de l'application des appareils de réfrigération à absorption fonctionnant à une seule température de froid, pour lesquels le fluide réfrigérant comprend un composant actif capable de subir alternativement un changement de phase liquide en phase vapeur, comme par exemple du $NH_3$, de préférence en présence d'un gaz inerte porteur comme par exemple de l'hydrogène, et d'un composant liquide porteur, comme par exemple de l'eau, dont le circuit comprend un absorbeur en position basse et un évaporateur en position haute reliés entre eux respectivement par un conduit descendant et un conduit ascendant, le dispositif selon l'invention est de préférence caractérisé en ce que l'évaporateur est disposé à un niveau intermédiaire ; un dispositif de transfert intermédiaire, comprenant au moins un évaporateur préliminaire du composant actif, est disposé à un niveau plus élevé que l'évaporateur entre l'évaporateur et l'absorbeur, cet évaporateur préliminaire comprenant au moins un conduit reliant l'évaporateur au conduit descendant, l'évaporateur préliminaire étant incliné en direction de l'évaporateur en présentant un point culminant sensiblement à l'opposé de l'évaporateur ; le composant actif liquide est introduit sensiblement au voisinage de ce point culminant de manière à s'écouler en direction de l'évaporateur. Selon une caractéristique préférée de ce dispositif, ledit dispositif de transfert intermédiaire comprend un conduit reliant l'absorbeur, de préférence le conduit ascendant, à l'évaporateur qui est disposé en contact mutuel avec le conduit reliant l'évaporateur au conduit descendant.

Selon un mode de réalisation particulièrement avantageux, le conduit reliant l'absorbeur, en particulier le conduit ascendant, à l'évaporateur est disposé sous le conduit reliant l'évaporateur au conduit descendant.

Selon une autre caractéristique avantageuse, le dispositif de transfert intermédiaire est isolé thermiquement du reste du circuit, tout en étant de préférence isolé thermiquement en commun avec l'échangeur thermique habituel formé par les conduits ascendant et descendant en contact mutuel.

Selon une caractéristique préférée, 75 % de l'échange thermique total est réalisé dans le dispositif d'échange intermédiaire.

Comme il a été précédemment indiqué, la circulation, le rendement thermique, la technologie de construction et la compacité des appareils frigorifiques à absorption sont encore grandement améliorés selon la présente invention par les dispositions suivantes.

Ainsi, le dispositif selon la présente invention est en outre caractérisé en ce que la quasi totalité du circuit de fluide réfrigérant, incluant l'évaporateur et le condenseur, est réalisée sous forme de deux corps tubulaires disposés l'un à l'intérieur de l'autre dans la direction longitudinale et agencés de manière à présenter des zones de contact communes, avantageusement selon la direction longitudinale ; le corps tubulaire interne étant de plus faible longueur et débouchant librement dans le corps tubulaire externe ; de préférence les corps tubulaires sont conformés de manière à définir une partie d'extrémité supérieure constituant l'évaporateur et une partie d'extrémité inférieure constituant l'absorbeur.

Selon un mode de réalisation préféré, ce dispositif est aussi caractérisé en ce que le corps tubulaire externe est obturé à la partie d'extrémité supérieure précitée tandis que le composant actif liquide est admis dans le corps tubulaire interne au niveau de son extrémité située dans la partie d'extrémité supérieure.

De préférence, le dispositif selon l'invention est encore caractérisé en ce que le corps tubulaire interne se termine dans la partie constituant l'absorbeur, à une certaine distance de l'extrémité inférieure du corps tubulaire externe, la partie restante la plus inférieure du corps tubulaire externe jouant le rôle de réserve de fluide réfrigérant, de préférence communiquant avec un dispositif formant thermo-pompe de régénération de composant actif en phase vapeur qui est ensuite réintroduit dans le circuit à sa partie supérieure.

On comprend ainsi que le dispositif selon l'invention permet bien d'obtenir les mêmes avantages techniques que le procédé précédemment décrit.

D'autres buts, caractéristiques et avantages de la présente invention apparaîtront aussi clairement de la description explicative qui va suivre faite en référence aux dessins annexés dans lesquels :

La figure 1 représente schématiquement le circuit complet de fluide réfrigérant d'un appareil frigorifique à absorption classique ;

La figure 2 représente schématiquement la circulation du fluide réfrigérant comportant un composant actif capable de subir alternativement un changement de phase liquide en phase gazeuse, qui est ici de préférence du $NH_3$ en présence d'un gaz inerte porteur, qui est ici de préférence de l'hydrogène, et d'un composant liquide porteur, ici de l'eau, dans le circuit représenté à la figure 1 ;

La figure 3 représente une vue agrandie de détail du dispositif réalisant le changement de phase dans le circuit classique objet des figures 1 et 2 ;

La figure 4 représente un premier mode de réalisation d'un dispositif selon l'invention améliorant la circulation de fluide réfrigérant ;

La figure 5 représente une vue de détails de la partie V de la figure 4 ;

La figure 6 représente un deuxième mode de réalisation d'un dispositif selon l'invention améliorant la circulation de fluide réfrigérant ;

La figure 7 représente un troisième mode de réalisation d'un dispositif selon l'invention améliorant la circulation du fluide réfrigérant ;

La figure 8 représente encore un autre mode de réalisation d'un dispositif selon l'invention ;

La figure 9 représente encore un autre mode de réalisation d'un dispositif selon l'invention.

La figure 10 représente un mode de réalisation préféré d'un dispositif selon l'invention améliorant la circulation de fluide réfrigérant dans un appareil frigorifique à absorption, à une seule température de froid, ainsi que notamment le rendement thermique de cet appareil ;

La figure 11 représente un autre mode de réalisation d'un dispositif selon l'invention améliorant la circulation du fluide réfrigérant dans le circuit de fluide réfrigérant d'un appareil frigorifique à absorption, qu'il soit à une ou plusieurs températures de froid ;

La figure 12 représente le circuit complet de fluide réfrigérant dans un appareil frigorifique à absorption intégrant le dispositif selon l'invention représenté à la figure 11 ;

La figure 13 représente en perspective une vue de détail de la disposition du dispositif selon l'invention faisant l'objet de la figure 11 ; et

La figure 14 représente une coupe axiale longitudinale selon la ligne de trace XIV-XIV de la figure 13.

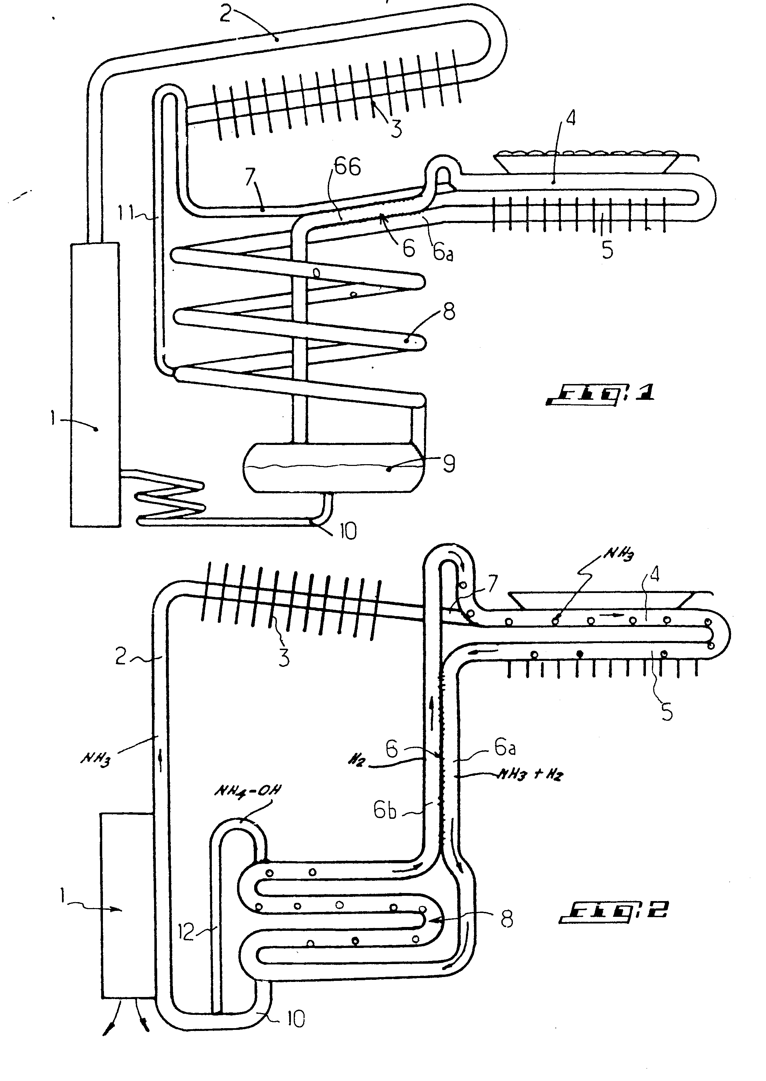

En référence à la figure 1, un appareil frigorifique à absorption classique comprend le circuit de fluide réfrigérant schématiquement représenté dans lequel circule un fluide réfrigérant qui comprend généralement un composant actif capable de subir alternativement un changement de phase liquide en phase vapeur, comme par exemple du $NH_3$, de préférence en présence d'un gaz inerte porteur, comme par exemple l'hydrogène, et d'un composant liquide porteur comme par exemple de l'eau.

Le circuit de fluide réfrigérant comprend plus précisément un dispositif (1) de changement de phase encore dénommé générateur pompe ou thermopompe, générant le composant actif, ici l'ammoniac en phase vapeur s'élevant par le conduit (2), formant également rectificateur d'eau, aboutissant ensuite à un condenseur (3) à ailettes, aboutissant ensuite à l'évaporteur (4) par un conduit d'alimentation (7) d'ammoniac liquide. Cet évaporateur (4) est un évaporateur à base température qui est suivi par un évaporateur (5) à température moyenne. Ce dernier évaporateur (5) est suivi d'un conduit descendant (6a) aboutissant à un absorbeur (8) situé à une position plus basse que les évaporateurs (4) et (5). L'absorbeur (8) communique lui-même avec un réservoir de fluide réfrigérant (9) formant également séparateur du gaz inerte porteur, ici l'hydrogène qui est renvoyé à l'évaporateur (4) par un conduit ascendant (6b). Les conduits descendant (6a) et ascendant (6b) sont en contact mutuel en direction longitudinale de manière à former un échangeur thermique (6). Le réservoir du fluide réfrigérant (9) comporte naturellement un conduit (10) d'alimentation de fluide réfrigérant liquide, comprenant essentiellement le composant liquide porteur, ici l'eau et le composant actif en phase liquide, ici l'ammoniac, qui aboutit au dispositif (1).

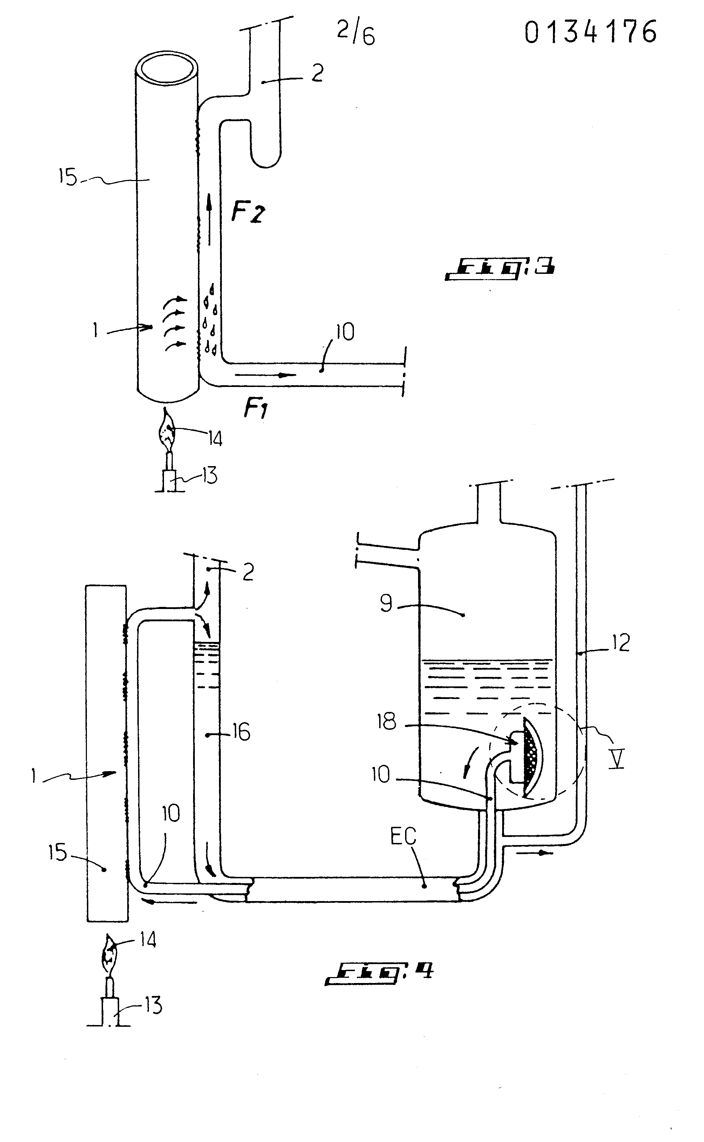

En général un conduit (11) d'équilibrage des pressions est prévu entre l'absorbeur (8) et la sortie du condenseur (3). D'autre part, un retour du composant liquide porteur, ici l'eau, pauvre en composant actif après vaporisation de celui-ci, est naturellement prévu dans le circuit, aboutissant en général à l'absorbeur (8), référencé (12) à la figure 2.

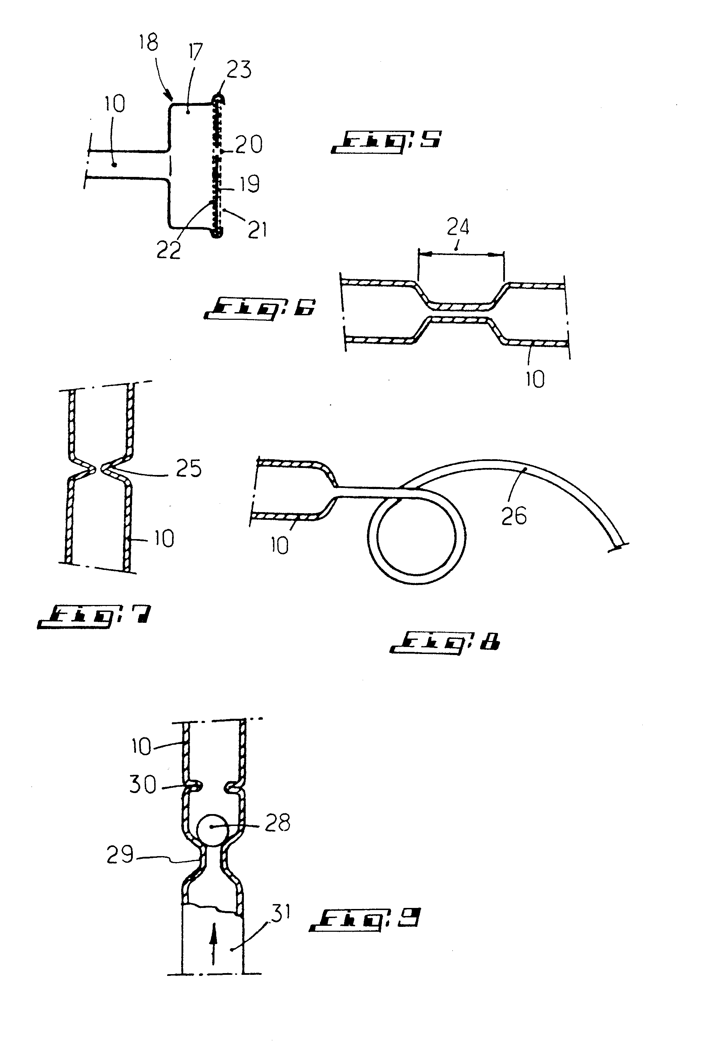

A la figure 3 on a représenté plus en détail le dispositif (1) de changement de phase. Celui-ci comprend un brûleur (13) produisant une flamme (14) chauffant un élément tubulaire (15) qui chauffe par convection thermique le conduit (10) dans lequel circule le fluide réfrigérant liquide, et comprenant essentiellement le composant liquide porteur, ici l'eau, et le composant actif liquide, ici l'ammoniac, c'est-à-dire que le fluide réfrigérant est une solution ammonicale.

Ainsi, le fonctionnement de cet appareil firgorifique à absorption classique est le suivant en référence aux figures 1 à 3 :

Le fluide réfrigérant circulant dans le conduit (10) s'échauffe par échange thermique avec l'élément (15) lui-même chauffé par la flamme (14) du brûleur (13) provoquant la vaporisation d'une partie importante du composant actif, ici l'ammoniac, comme représenté par des bulles, de sorte qu'il se produit une augmentation de volume dans la veine liquide qui entraîne un déplacement de cette veine dans les deux sens, comme indiqué par les flèches $F_1$ et $F_2$, respectivement, vers l'arrivée du fluide réfrigérant depuis le réservoir (9) et vers le conduit (2) de sortie. Le mouvement de la veine liquide selon la flèche $F_1$ s'oppose au nécessaire déplacement vers le conduit de sortie (2), ce qui ralentit brusquement la circulation du fluide réfrigérant, autrement dit le rendement du processus du transport de fluide. Comme dans les appareils frigorifiques, cette circulation est associée au rendement thermique, il se produit en conséquence une diminution du rendement thermique.

D'autre part, un risque sérieux de surchauffe est présent pouvant aboutir à une transformation complète du composant actif en phase gazeuse et à un arrêt concomitant du phénomène de thermopompage dû à ce changement de phase. L'appareil peut donc tomber en panne.

En référence à la figure 2, on peut observer que le composant actif en phase vapeur mélangé à un peu d'eau vaporisé monte dans le conduit (2). Pendant le parcours dans ce conduit (2), les vapeurs d'eau sont rectifiés et les condensats reviennent à leur point d'origine. Les vapeurs de $NH_3$ aboutissent au condenseur (3) où elles cèdent leur chaleur latente et sont liquéfiées. Cet ammoniac liquide s'écoule par le tube (7) jusqu'à l'évaporateur (4) où elles entrent en contact avec l'hydrogène formant le gaz inerte porteur. Ce contact physique de l'hydrogène avec le $NH_3$ liquide produit une évaporation partielle de l'ammoniac, aboutissant à une intense réfrigération qui atteint au moins -10°C. Dans l'évaporateur (5), il se produit une nouvelle vaporisation de l'ammoniac aboutissant à une température moyenne qui est mise à profit à la partie réfrigérateur classique d'un appareil réfrigérateur ménager. Ensuite, les vapeurs de $NH_3$ + $H_2$ résultant de l'évaporation produite dans les évaporateurs (4) et (5) descendent par le conduit descendant (6a) en étant en échange thermique avec le conduit ascendant (6b) provenant de l'absorbeur (8) en refroidissant cet hydrogène ascendant. Cette circulation est rendue possible par la différence gravimétrique entre le fluide descendant dans le conduit (6a) et le fluide ascendant dans le conduit (6b) par la différence de pression en phase vapeur du composant actif formé ici par l'ammoniac. A l'absorbeur (8), on absorbe dans le composant liquide porteur, ici l'eau, la quantité nécessaire de vapeur d'ammoniac pour diminuer la pression de vapeur d'ammoniac dans le gaz inerte porteur pour obtenir justement la différence de gravimétrie recherchée pour la circulation du fluide par le circuit. L'absorption est rendue possible par le retour du composant liquide porteur, ici l'eau à contre-courant dans l'absorbeur (8) comme cela est clairement visible à la figure 2. La température dans l'absorbeur (8) atteint généralement plus 40° C.

On peut ainsi constater que la circulation de fluide réfrigérant dans un appareil frigorifique à absorption est basée sur le principe des vases communiquants et dépend d'une part de la circulation au niveau du dispositif de vaporisation (1) encore nommé dispositif de thermopompage et de la différence de gravimétrie existant dans la phase gazeuse entre la phase gazeuse descendante par le conduit (6a) et ascendant par le conduit (6b), par une différence de proportion dans la phase gazeuse du composant actif, ici l'ammoniac.

Comme il a été indiqué précédemment, les appareils connus jusqu'à présent n'ont pas permis d'aboutir à une circulation suffisante pour permettre d'aboutir à un rendement thermique global de l'appareil compétitif avec les autres appareils frigorifique basés sur une compression suivie d'une détente.

D'autre part, les appareils frigorifiques à absorption connus jusqu'à présent ne présentent également pas une sécurité de fonctionnement suffisante en raison des risques d'arrêt du dispositif de vaporisation (1) pour les raisons explicitées précédemment.

La présente invention permet pour la première fois de résoudre ces problèmes techniques simultanément comme cela sera maintenant décrit.

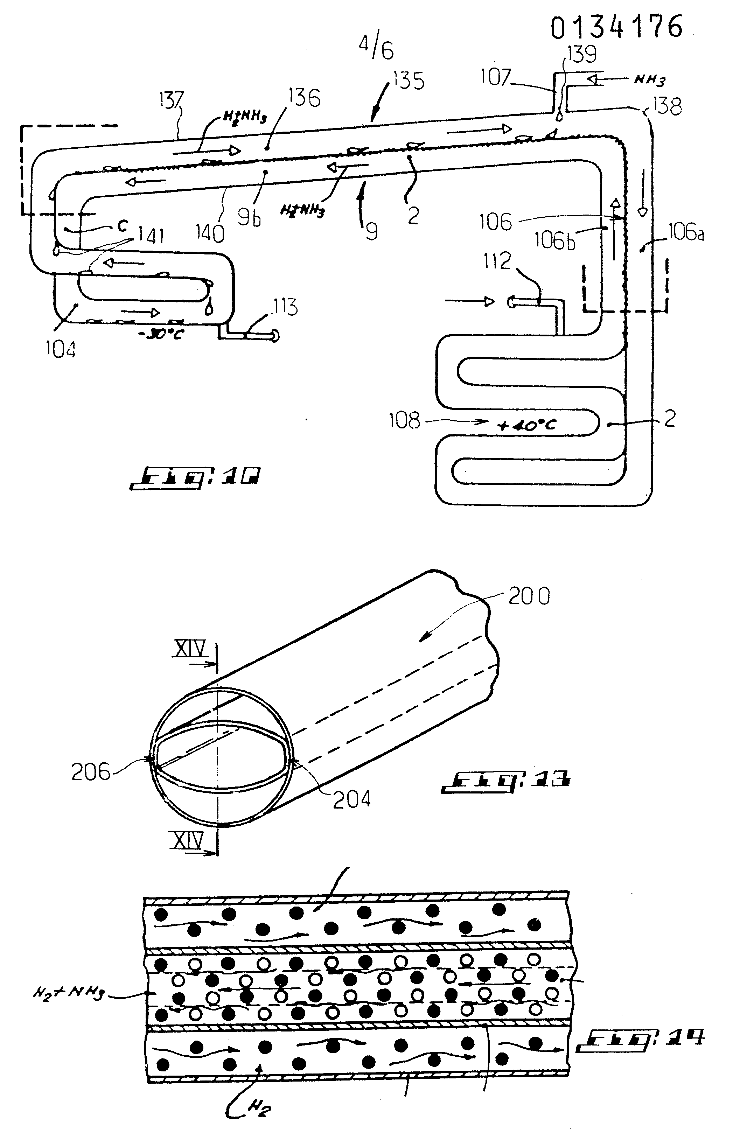

En référence plus particulièrement à la figure 4, on décrit un premier mode de réalisation d'un dispositif selon l'invention pour améliorer la circulation dans un sens déterminé d'un fluide, de préférence à fonction réfrigérante, ce dispositif est caractérisé en ce qu'il comprend, en amont du point de changement de phase (ici le dispositif (1) réalisant le changement de phase) des moyens (18) réduisant la section du circuit et limitant le passage du fluide en phase liquide de manière à empêcher la circulation en contre sens ou en retour du fluide liquide favorisant ainsi une circulation préférentielle dans le sens déterminé souhaité.

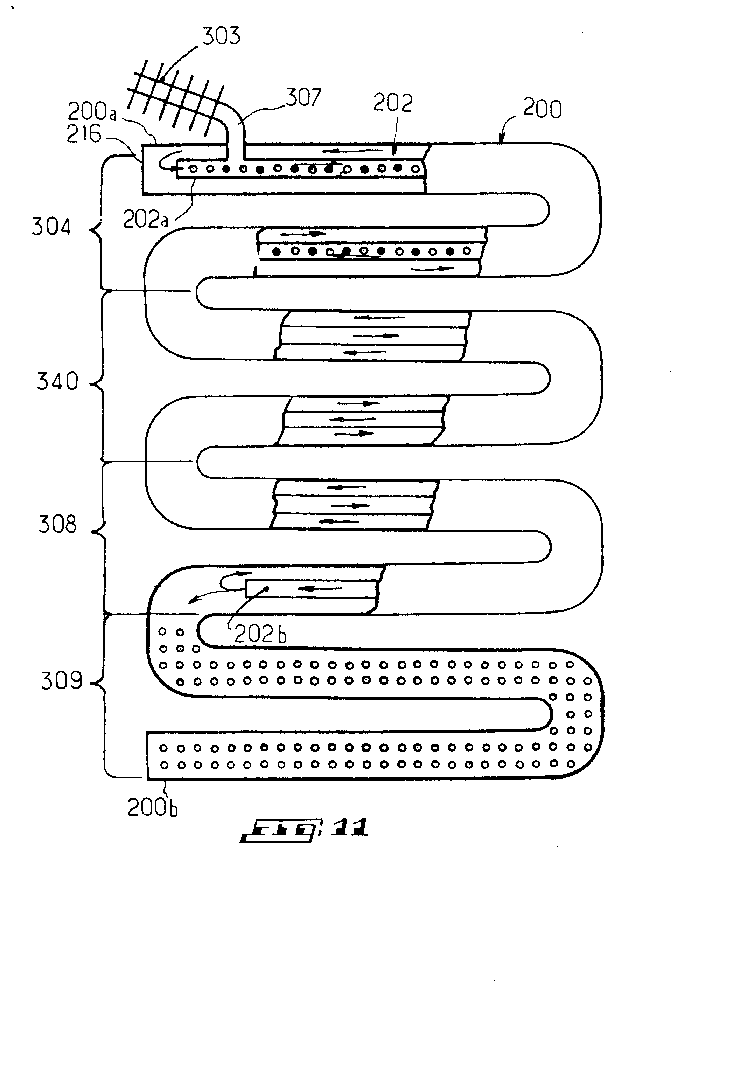

Selon un mode de réalisation particulier, ces moyens (18) réduisant la section du circuit sont formés par au moins un étranglement (20), clairement visible à la figure 5 du circuit en un point donné, définissant de préférence un orifice calibré, comme représenté, d'une dimension facilement déterminée par l'homme du métier.

Selon le mode de réalisation particulier représenté à la figure 5, l'orifice calibré (20) est défini dans une plaque (19) solidarisée du conduit (10) de préférence au niveau de l'admission du fluide dans le circuit, c'est-à-dire au niveau de l'admission dans ce conduit, en particulier depuis le réservoir de fluide (9) habituel. La plaque (19) est ainsi dans le réservoir (9).

Cette plaque (19) est plus précisément maintenue en position dans une cage (17) au moyen d'une bague (23), d'un sertissage ou analogue, avec de préférence présence de toile filtrante (21), (22) de part et d'autre de la plaque (19) ayant pour mission d'empêcher les impuretés de pénétrer dans le conduit (10).

On comprend ici que lorsque se produit la dilatation de la veine liquide lors du changement de phase réalisé par le dispositif de changement de phase (1), les moyens (18) réduisant la section, formés ici par un étranglement sous forme d'un orifice calibré (20), ces moyens limitent le passage du fluide en phase liquide en empêchant la circulation à contre sens ou en retour du fluide liquide et elle favorise ainsi une circulation préférentielle dans le sens déterminé souhaité, et c'est-à-dire dans le sens de la flèche $F_2$ de la figure 3.

Aussi, en référence à la figure 4, on peut encore observer que le conduit (10) alimentant le fluide en phase liquide au dispositif de vaporisation (1) est de préférence disposé de manière à réaliser un échange thermique avec le fluide liquide comprenant essentiellement le composant liquide porteur, ici l'eau recyclée par une dérivation (16) avant de retourner au condenseur par le conduit (12) précédemment mentionné en référence à la figure 2.

Selon la disposition représentée à la figure 4, on observera que le conduit (10) alimentant le fluide au dispositif de vaporisation (1) est disposé sur au moins une partie de sa longueur à l'intérieur du conduit (16) de manière à améliorer l'échange thermique, en formant ainsi en quelque sorte un échangeur de chaleur EC.

On comprend ainsi que le dispositif selon l'invention permet de réaliser le procédé précédemment décrit améliorant la circulation du fluide, de préférence à fonction réfrigérante, et par conséquent améliorant le rendement thermique de l'appareil.

On obtient également tous les avantages techniques précédemment décrit dans la partie introductive, à savoir que l'on obtient selon l'invention également un contrôle précis des débits dans le conduit (10) d'admission, ceci n'étant pas possible auparavant.

On élimine également les risques de surchauffe au niveau du dispositif de vaporisation (1). L'invention permet également de réaliser la totalité de l'apport de chaleur au niveau du dispositif de vaporisation (1), ce qui n'était pas possible auparavant en éliminant ainsi la nécessité d'éliminer un bouilleur annexe. De même, les tolérances d'apport de chaleur son beaucoup plus grandes avec le dispositif selon l'invention.

Egalement, un autre avantage inattendu apporté par le dispositif selon l'invention réside dans le fait que l'on peut utiliser des fluides réfrigérants à teneur beaucoup plus faible en composant actif . Dans le cas de l'ammoniac généralement utilisé comme composant actif dans le fluide réfrigérant, il était nécessaire auparavant d'utiliser au moins 30 % d'ammoniac.

Selon l'invention, on peut réduire cette proportion à 5 à 10 %, ce qui est tout à fait remarquable et ce qui permet en outre de descendre à des températures de réfrigération de -30 à -40°C ce quiest encore remarquable.

De ce fait, l'invention permet d'obtenir une température de l'évaporateur beaucoup plus basse.

Ainsi, le rendement thermique est augmenté de 3 à 4 fois de sorte que les appareils frigorifiques à absorption selon la présente invention sont tout à fait comparables aux appareils frigoriques du type à compression et détente.

On rappelle ici que les appareils frigorifiques à absorption fonctionnent essentiellement à la même pression.

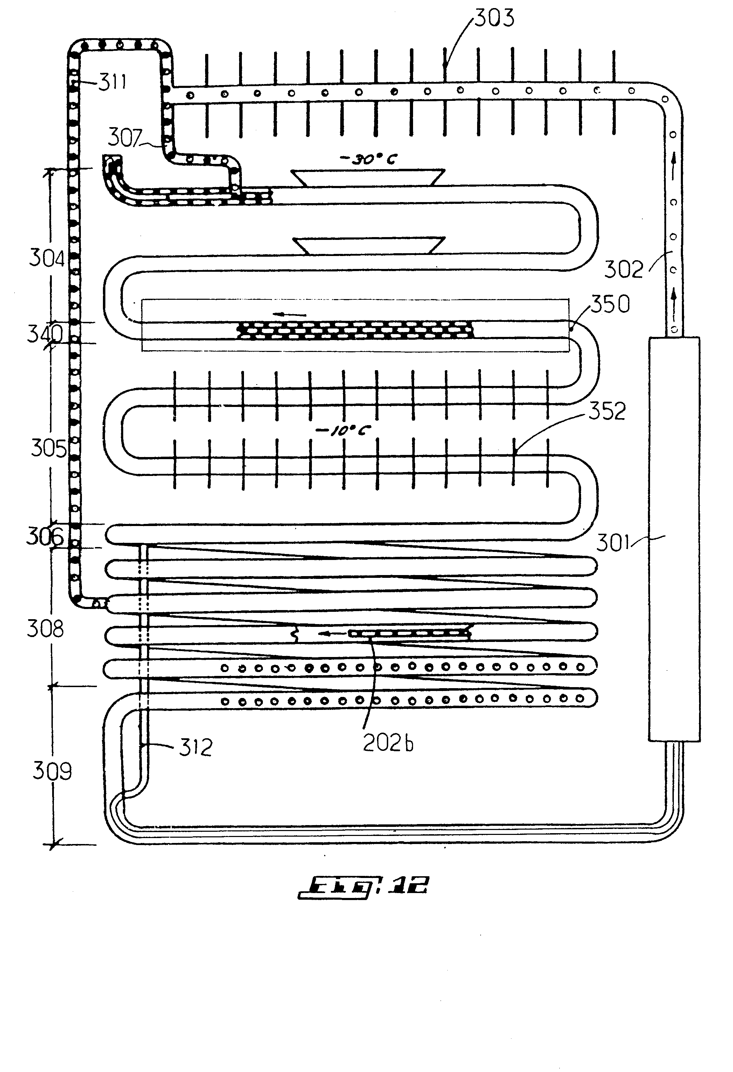

En référence à la figure 6, une variante de réalisation du dispositif selon l'invention de la figure 4 consiste à prévoir un étranglement (24) sur le conduit (10) s'étendant sur une longueur déterminée de conduit.

Selon la variante de réalisation de la figure 7, les moyens (18) réduisant la section sont formés par un étranglement (25) formé en un seul point et définissant de préférence également un orifice calibré.

En référence à la figure 8 représentant un autre mode de réalisation, les moyens selon l'invention réduisant la section comprennent un tube capillaire (26) intégré au circuit, et donc en particulier au conduit (10). Ce tube capillaire (26) peut être interposé dans le conduit (10) dans une partie intermédiaire entre le dispositif de vaporisation et le réservoir de fluide (9), représentés à la figure 1.

Enfin, en référence à la figure 9, une autre variante de réalisation des moyens selon l'invention réduisant la section comprend au moins deux étranglements référencés (29), (30) voisins longitudinalement décalés sur le conduit (10), entre lesquels est logé un élément (28) formant bille, l'un (29) au moins desdits étranglement (29), (30) étant prévu pour constituer un siège dudit élément formant bille (28) pour interdire la circulation de fluide à contre-courant en plaçant l'élément formant bille (28) contre le siège sous l'effet de la propre poussée du liquide. Naturellement, la partie amont (31) du conduit (10) communique avec le réservoir (9) de fluide.

On comprend ainsi que toutes les variantes de réalisation du dispositif selon l'invention présentent en outre l'avantage de pouvoir déterminer commodément la résistance appropriée qu'il s'agit d'opposer à la veine liquide, ce qui constitue encore un avantage important de l'invention.

Comme indiqué précédemment, la circulation du fluide, de préférence réfrigérant, peut être encore améliorée par les nouveaux dispositifs suivants selon l'invention modifiant la réalisation du circuit de fluide.

En référence à la figure 10, on a représenté un dispositif selon l'invention qui permet à des appareils frigorifiques à absorption de produire de très basses températures de froid. On sait que pour les appareils à absorption un inconvénient majeur réside dans le fait que la différence de poids spécifique entre les conduits ascendant et descendant précités devient insignifiante en raison de la faible pression qui sort de l'évaporateur ce qui conduit à des différences de pression de l'ammoniac dans le gaz inerte porteur non supérieures à $0,5$ Kg par $cm^2$. Or, on sait que cette différence de poids spécifique conditionne la circulation du fluide dans le circuit. On obtient donc une propulsion plus difficile obligeant à mettre en circulation dans le circuit des quantités d'hydrogène de l'ordre de 5 fois plus grandes en volume pour pouvoir transporter la quantité suffisante de $NH_3$ à la température appropriée, ceci n'étant pas jusqu'à présent réalisable dans les appareils connus.

La présente invention, fournit une solution à ce problème particulier grâce d'une part au dispositif précédent et grâce au nouveau dispositif représenté à la figure 10.

En référence à la figure 10, et pour permettre une comparaison plus aisée avec les circuits classiques des figures 1 et 2, on a utilisé les mêmes chiffres de référence qu'aux figures 1 et 2 augmentés de 100.

Ainsi, le dispositif selon l'invention est caractérisé en ce que l'évaporateur (104) est disposé à un niveau intermédiaire. Ceci signifie que l'évaporateur (104) ne se trouve plus au niveau le plus élévé dans la partie de circuit comprenant l'évaporateur (104) et l'absorbeur (108).

En outre, un dispositif de transfert intermédiaire (135), comprenant au moins un évaporateur préliminaire (136) du composant actif, est disposé à un niveau plus élevé que l'évaporateur (104) entre l'évaporateur (104) et l'absorbeur (108). Cet évaporateur préliminaire (136) comprend au moins un conduit (137) reliant l'évaporateur (104) au conduit descendant (106a), et étant incliné en direction de l'évaporateur (104) en présentant un point culminant (138) sensiblement à l'opposé de l'évaporateur (104). Avantageusement, le composant actif liquide, ici le $NH_3$, est introduit sensiblement au voisinage de ce point culminant (138), par le conduit (107) de manière à s'écouler en direction de l'évaporateur (104) comme clairement symbolisé par les gouttes de liquide (139).

De préférence, ce dispositif de transfert intermédiaire (135) comprend au moins un conduit (140) reliant l'absorbeur (108), de préférence le conduit ascendant (106b), à l'évaporateur (104), et qui est disposé en contact mutuel avec le conduit (137) de l'évaporateur préliminaire (136) reliant l'évaporateur (104) au conduit descendant (106a).

Selon une cractéristique préférée, comme réprésenté à la figure 10, le conduit (140) reliant l'absorbeur (8), en particulier le conduit ascendant (106b) à l'évaporateur (104) est disposé sous le conduit (137) reliant l'évaporateur (104) au conduit descendant (106a).

Selon une autre caractéristique préférée, le dispositif de transfert intermédiaire (135) est isolé thermiquement du reste du circuit tout en étant de préférence isolé thermiquement simultanément avec l'échangeur de chaleur (106). On obtient ainsi le circuit très simple représenté à la figure (10) selon lequel un contact mutuel est obtenu entre les divers conduits depuis l'absorbeur (108) jusqu'à l'évaporateur (104) et inversement. Ce contact mutuel est de préférence réalisé par une soudure S le long de tout le trajet desdits conduits.

On obtient ainsi une amélioration radicale de la circulation du fluide réfrigérant, résultant en une amélioration tout à fait remarquable et inattendue du rendement thermique. Ainsi, le dispositif de transfert intermédiaire (135), comprenant l'évaporateur préliminaire (136) permet de travailler au niveau de l'évaporateur (104) à au moins -30°C, ce qui n'était pas possible auparavant, l'absorbeur (108) travaillant lui à environ + 40°C.

Le fonctionnement de ce dispositif ainsi modifié est le suivant :

L'ammoniac liquide anhydre entrant par le conduit (107) en provenant du condenseur commme le condenseur (3) des figures 1 et 2 est introduit dans le circuit à la température de saturation, c'est-à-dire sans refroidissement préalable. Cet ammoniac saturé chaud entre alors en contact physique avec le gaz sortant de l'évaporateur (104) comprenant essentiellement le gaz inerte porteur, c'est-à-dire l'hydrogène, pauvre en $NH_3$, en provoquant l'évaporation du $NH_3$, en provoquant un refroidissement de l'ammoniac liquide.

D'autre part, grâce à l'échange thermique réalisé avec le mélange hydrogène et ammoniac, pauvre en ammoniac, provenant de l'aborbeur (108), circulant dans le conduit (140), ce mélange est refroidi avant de pénétrer à l'évaporateur (104) par transfert de la chaleur sensible et latente au mélange gazeux sortant de l'évaporateur (104) par le conduit (137). Ceci permet d'autre part de conditionner le mélange gazeux entrant dans l'évaporateur (104) de sorte que l'hydrogène parvienne au point C très près de la température de saturation de l'évaporateur (104) de sorte que lorsque le fluide gazeux entre en contact à contre-courant avec le $NH_3$ liquide résiduel aboutissant à l'évaporateur (104), comme schématisé par les gouttes (141), il provoque son évaporation en fournissant la température de congélation profonde désirée. A la figure 10, le conduit (112) correspond au conduit de recyclage (12) des figures 1 et 2 de recyclage du fluide liquide pauvre, c'est-à-dire essentiellement de l'eau tandis que la sortie (113) au fond de l'évaporateur (104) peut être reliée au réservoir de fluide (9) ou au conduit (112), de manière à drainer les résidus de fluide liquide, c'est-à-dire essentiellement de l'eau.

Les figures 11 à 14 concernent des modifications supplémentaires au circuit de fluide réfrigérant permettant d'améliorer d'une part la circulation du fluide réfrigérant avec l'amélioration concomitante de rendement thermique, et d'autre part de simplifier de manière radicale la construction de l'appareil.

Ainsi, en référence aux figures 11 à 14, le dispositif selon l'invention est caractérisé en ce que la quasi totalité du circuit de fluide réfrigérant, incluant l'évaporateur et l'absorbeur ., est réalisée sous forme de deux corps tubulaires (200, 202) disposés l'un (202) à l'intérieur de l'autre dans la direction longitudinale et agencés de manière à présenter des zones de contact communes (204), (206), clairement visibles à la figure 13, avantageusement selon la direction longitudinale, comme représenté à la figure 13.

Selon une disposition préférée selon l'invention, le corps tubulaire interne (202) est de plus faible longueur comme clairement visible à la figure 11, et débouche librement dans le corps tubulaire externe (200). De préférence, les corps tubulaires (200), (202) sont conformés de manière à définir une partie d'extrémité supérieure (304) constituant l'évaporateur et une partie d'extrémité inférieure (308) constituant un absorbeur.

Selon un mode de réalisation particulier, comme représenté aux figures 11 à 14, le corps tubulaire externe (200) est obturé à la partie d'extrémité supérieure par un moyen de fermeture approprié (216) classique

0134176

tandis que le composant actif liquide, qui est habituellement $NH_3$, est admis dans le corps tubulaire interne (202) au niveau de son extrémité (202a) située dans la partie d'extrémité supérieure (304), par la présence d'un conduit approprié (307) communiquant avec le condenseur (303) habituel et que l'on voit bien à la figure 12. Ceci permet d'améliorer radicalement le rendement thermique.

Selon une autre caractéristique de l'invention, ce dispositif est de préférence en outre caractérisé en ce que le corps tubulaire interne (202) se termine à sa partie inférieure (202b) dans la partie constituant l'absorbeur (318), à une distance de l'extrémité inférieure (200b) du corps tubulaire externe (200). Ainsi la partie restante la plus inférieure référencée (309) du corps tubulaire externe (200) joue le rôle de réserve de fluide réfrigérant qui communique de préférence avec un dispositif formant thermopompe (301) qui est de préférence l'un des dispositifs selon l'invention faisant l'objet des figures 4 à 9, de régénération de composant actif en phase vapeur qui est ensuite réintroduit dans le circuit à sa partie supérieure de manière habituelle, comme clairement visible à la figure 12 (soit en 307).

On notera que les parties du circuit identiques aux parties classiques des figures 1 et 2 portent les mêmes numéros de référence augmentés de 300.

Il est à noter que de préférence, le corps tubulaire interne (202) se termine à son extrémité inférieure (202b) à la partie inférieure de la partie (308) constituant l'absorbeur.

A la figure 11, la partie intermédiaire (340) corres-

pond à une partie d'échange thermique fonctionnant donc en échangeur thermique.

En référence à la figure 12, le fonctionnement de ce dispositif est le suivant :

Le $NH_3$ liquide introduit par le conduit (307), produit par le dispositif d'évaporation (301) et le condenseur (303) pénètre dans le corps tubulaire interne (202) vers son extrémité supérieure (202a) où il entre en contact physique avec le courant gazeux contenant essentiellement de l'hydrogène pauvre en ammoniac circulant dans le conduit externe comme indiqué à la figure 11 et qui pénètre par l'extrémité supérieure ouverte du corps tubulaire interne (202) comme clairement schématisé à la figure 11. Le passage de l'hydrogène dans le corps tubulaire interne (202) en contact avec le $NH_3$ liquide produit une évaporation partielle d'ammoniac résultant en une intense réfrigération qui atteint les - 30°C en constituant ainsi un premier étage évaporateur (304) analogue à l'évaporateur (4) des figures 1 et 2 . Cette température peut ainsi être mise à profit pour former la partie congélateur d'un réfrigérateur ménager.

Le $NH_3$ liquide résultant, qui n'a pas été évaporé dans cet étage, circule dans le tronçon suivant qui est de préférence isolé thermiquement de l'extérieur par une isolation thermique (350) où il se produit un échange de chaleur entre les fluides descendant et le $H_2$ ascendant qui est plus chaud, de manière à conditionner la température de l'hydrogène pour l'amener à un niveau proche du point de saturation dans la partie supérieure formant premier étage d'évaporation (304).

Dans le tronçon suivant, les tubes sont de préférence pourvus d'ailettes (352) de manière à permettre l'évaporation totale du $NH_3$ et à former le second étage d'évaporation (305), analogue à l'étage d'évaporation (5) des figures 1 et 2. On obtient ainsi une température de réfrigération de par exemple moins de -10°C, utile pour réfrigérer la partie de conservation d'un réfrigérateur ménager.

Par la suite, il se produit un échange de chaleur sur le tronçon suivant, référencé (306) et correspondant d'une certaine manière à l'échangeur thermique (6) des figures 1 et 2.

Le fluide descendant pénètre alors ensuite dans la partie inférieure du corps tubulaire interne (202), correspondant à l'étage d'absorption (308) de manière à déboucher dans le corps tubulaire externe (200) à la partie inférieure de l'absorbeur (308) en conditionnant l'hydrogène jusqu'à son point de saturation.

Dans cette zone, on atteint la température la plus élevée de l'absorbeur, par exemple de 70 °C environ avec une température ambiante de 32°C. Il est à noter que l'on obtient également, par cette structure particulière où l'absorbeur est formé par une disposition des conduits externe (200) et interne (202) l'un dans l'autre, un gradient d'accroissement de la température de l'absorbeur (308) jusqu'à son point bas en obtenant ainsi à la partie haute de l'absorbeur une température la plus froide possible pour pouvoir absorber le maximum d'ammoniac.

On conçoit ainsi que l'on obtient une très grande simplification de construction de l'appareil d'autant plus qu'il est aisé de couder les corps tubulaires pour restreindre la hauteur totale de l'appareil tout en obtenant une circulation améliorée du fluide réfrigérant aboutissant à un rendement thermique élevé. En outre, par la disposition des conduits l'un dans l'autre, les surfaces d'échange thermique sont maximales.

D'autre part, on conçoit aisément, en référence à la figure 13, que les surfaces de contact communes (204), (206) peuvent être obtenues par simple déformation de l'un des deux corps tubulaires (200), (202). Cette disposition présente l'avantage de supprimer la nécessité de l'utilisation des soudures ce qui réduit les temps de montage ou de fabrication de manière radicale, en aboutissant alors à un prix de revient de fabrication des appareils le plus faible possible.

Naturellement, la configuration des corps tubulaires (200), (202) est quelconque et elle peut être circulaire, polygonale ou mixte ou une quelconque combinaison de ces configurations. En outre, la déformation appliquée à l'un des corps tubulaires peut être réalisée en deux points ou zones de sa périphérie, comme représenté aux figures 13 et 14 ou en plusieurs points et il est aussi possible de déformer aussi bien le tube externe que le tube interne ou les deux, simultanément. Il est à noter que la déformation dans la direction axiale est préférée puisqu'elle donne des coûts de fabrication très bas en obtenant un équipement très compact

Naturellement, l'invention comprend tous les moyens constituant des équivalents techniques des moyens décrits ainsi que leurs diverses combinaisons.

Revendications

1. Procédé d'amélioration de la circulation dans un sens déterminé d'un fluide, de préférence à fonction réfrigérante, circulant tout d'abord essentiellement en phase liquide dans un circuit, de préférence à fonction réfrigérante d'un appareil frigorifique à absorption, et subissant en un point donné dudit circuit au moins partiellement un changement de phase en produisant au moins partiellement une phase vapeur, caractérisé en ce qu'on réalise, en amont dudit point de changement de phase, une réduction de la section dudit circuit limitant le passage dudit fluide en phase liquide de manière à empêcher la circulation à contre sens ou en retour dudit fluide liquide en favorisant ainsi une circulation préférentielle dans le sens déterminé souhaité.

2. Procédé selon la revendication 1, d'amélioration de la circulation d'un fluide réfrigérant, comprenant un composant actif capable de subir alternativement un changement de phase liquide en phase gazeuse, comme par exemple du $NH_3$, de préférence en présence d'un gaz inerte porteur, comme par exemple de l'hydrogène, et d'un composant liquide porteur, comme par exemple de l'eau, dans un circuit de fluide réfrigérant d'un appareil de réfrigération à absorption, ledit circuit comprenant un absorbeur en position basse et un évaporateur en position haute reliés entre eux respectivement par un conduit descendant et un conduit ascendant, caractérisé en ce qu'on modifie le circuit de manière à disposer l'évaporateur à un niveau intermédiaire et on introduit un étage de transfert intermédiaire entre l'évaporateur et l'absorbeur, comprenant un étage d'évaporation préliminaire du composant actif qui est disposé à un niveau plus élevé que l'évaporateur, ledit étage étant incliné en direction de l'évaporateur pour présenter un point culminant situé à l'opposé de l'évaporateur ; on introduit le composant actif en phase liquide sensiblement au voisinage de ce point culminant de manière à ce qu'il s'écoule en direction de l'évaporateur, cette introduction étant réalisée avantageusement à la températaure de saturation du composant actif ; de préférence on réalise simultanément dans cet étage de transfert intermédiaire, un échange thermique à contre-courant avec le fluide réfrigérant provenant de l'absorbeur.

3. Procédé selon la revendication 1 ou 2, caractérisé en ce qu'en vue de simplifier la construction de l'appareil, d'augmenter sa compacité, et d'améliorer le rendement thermique, on réalise la quasi totalité du circuit de fluide réfrigérant, incluant l'évaporateur et le condenseur, sous forme de deux corps tubulaires disposés l'un à l'intérieur de l'autre dans la direction longitudinale et qui sont agencés de manière à présenter des zones de contact communes, longitudinales de préférence.

4. Procédé selon la revendication 3, caractérisé en ce qu'on réalise la production de froid dans le tube interne qui constitue la partie active de l'appareil en introduisant le composant actif en phase liquide dans le corps tubulaire interne ; de préférence, les zones de contact longitudinales précitées sont obtenues par déformation de l'un des corps tubulaires qui sont ainsi en contact sans soudure.

5. Dispositif pour améliorer la circulation dans un sens déterminé d'un fluide, de préférence à fonction réfrigérante, circulant tout d'abord essentiellement en phase liquide dans un circuit, de préférence à fonction réfrigérante d'un appareil frigorifique à absorption, et subissant en un point donné dudit circuit au moins partiellement un changement de phase en produisant au moins partiellement une phase vapeur, caractérisé en ce qu'il comprend, en amont dudit point de changement de phase, des moyens (18) réduisant la section dudit circuit limitant le passage dudit fluide en phase liquide de manière à empêcher la circulation à contre sens ou en retour du fluide liquide en favorisant ainsi une circulation préférentielle dans le sens déterminé souhaité.

6. Dispositif selon la revendication 5, caractérisé en ce que les moyens (18) précités réduisant la section du circuit sont formés par au moins un étranglement (20 ; 24 ; 25 ; 26 ; 29 ; 30) dudit circuit en un point donné, définissant de préférence un orifice calibré.

7. Dispositif selon la revendication 6, caractérisé en ce que l'étranglement (24) s'étend sur une longueur déterminée de conduit.

8. Dispositif selon la revendication 6, caractérisé en ce que l'étranglement comprend un tube capillaire (26) intégré audit circuit.

9. Dispositif selon la revendication 6, caractérisé en ce qu'il comprend au moins deux étranglements (29, 30) voisins, longitudinalement décalés, entre lesquels est logé un élément (28) formant bille, l'un (29) au moins desdits étranglements (29, 30) étant prévu pour constituer un siège dudit élément formant bille pour interdire la circulation de fluide à contre-courant.

10. Dispositif selon la revendication 6, caractérisé en ce que l'orifice calibré (20) est défini dans une plaque (19) solidarisée du conduit de préférence au niveau de l'admission du fluide dans ledit circuit, en particulier depuis un réservoir de fluide.

11. Dispositif selon la revendication 5, dans lequel le fluide réfrigérant comprend un composant actif capable de subir alternativement un changement de phase liquide en phase vapeur, comme par exemple du $NH_3$, de préférence en présence d'un gaz inerte porteur, comme par exemple l'hydrogène, et d'un composant liquide porteur comme par exemple de l'eau, et circule dans un circuit de fluide réfrigérant d'un appareil de réfrigération à absorption, qui comprend un absorbeur en position basse, et un évaporateur en position haute, reliés entre eux respectivement par un conduit descendant et un conduit ascendant, caractérisé en ce que l'évaporateur (104) est disposé à un niveau intermédiaire ; un dispositif de transfert intermédiaire (135), comprenant au moins un évaporateur préliminaire (136) du composant actif, est disposé à un niveau plus élévé que l'évaporateur entre l'évaporateur et l'absorbeur, cet évaporateur préliminaire (136) comprenant au moins un conduit (137) reliant l'évaporateur (104) au conduit descendant (106a), et étant incliné en direction de l'évaporateur en présentant un point culminant (138) sensiblement à l'opposé de l'évaporateur (104) ; le composant actif liquide est introduit sensiblement au voisinage de ce point culminant (138) de manière à s'écouler en direction de l'évaporateur (104) ; de préférence ce dispositif de transfert intermédiaire (135) comprend au moins un conduit (140) reliant l'absorbeur (108), de préférence le conduit ascendant (106b), à l'évaporateur (104), et qui est disposé en contact mutuel avec le conduit (137) de l'évaporateur préliminaire (136) reliant l'évaporateur (104) au conduit descendant (106a).

12. Dispositif selon la revendication 11, caractérisé en ce que le conduit (140) reliant l'absorbeur (108), en particulier le conduit ascendant (106b), à l'évaporateur est disposé sous le conduit (137) reliant l'évaporateur (104) au conduit descendant (106a).

13. Dispositif selon la revendication 11 ou 12, caractérisé en ce que le dispositif de transfert intermédiaire (135) précité est isolé thermiquement du reste du circuit.

14. Dispositif selon l'une des revendications 11 à 13, caractérisé en ce qu'environ 75 % de l'échange thermique total est réalisé dans le dispositif de transfert intermédiaire (135).

15. Dispositif selon l'une quelconque des revendications 5 à 14, caractérisé en ce que la quasi totalité du circuit de fluide réfrigérant, incluant l'évaporateur et l'absorbeur , est réalisée sous forme de deux corps tubulaires (200,202) disposés l'un à l'intérieur de l'autre dans la direction longitudinale et agencés de manière à présenter des zones de contact communes (204,206) avantageusement dans la direction longitudinale ; le corps tubulaire interne (202) étant de plus faible longueur et débouchant librement dans le corps tubulaire externe (200) ; de préférence les corps tubulaires sont conformés de manière à définir une partie d'extrémité supérieure (304) constituant l'évaporateur et une partie d'extrémité inférieure (308) constituant l'absorbeur.

16. Dispositif selon la revendication 15, caractérisé en ce que le corps tubulaire externe (200) est obturé à la partie d'extrémité supérieure précitée tandis que le composant actif liquide est admis dans le corps tubulaire interne (202) au niveau de son extrémité (202a) située dans la partie d'extrémité supérieure (304).

17. Dispositif selon la revendication 16, caractérisé en ce que le corps tubulaire interne se termine dans la partie (308) constituant l'absorbeur, et à une certaine distance de l'extrémité inférieure (200b) du corps tubulaire externe, la partie restant (309) la plus inférieure du corps tubulaire externe (200) jouant le rôle de réserve de fluide réfrigérant, de préférence communiquant avec un dispositif (301) formant thermopompe de régénération de composant actif en phase vapeur qui est ensuite réintroduit dans le circuit à sa partie supérieure (en 307).

1/6

0134176

FIG.1

FIG.2

*Fig.3*

*Fig.4*

Fig. 5

Fig. 6

Fig. 7

Fig. 8

Fig. 9

0134176

$Fig. 10$

$Fig. 13$

$Fig. 14$

_FIG. 11_

0134176

Fig. 12

**Office européen des brevets**

**RAPPORT DE RECHERCHE EUROPEENNE**

EP 84 40 1658

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 436 249 (BOSCH-SIEMENS HAUSGERÄTE GmbH) * en entier * | 1,5-7, 10 | F 25 B 15/10 F 25 B 33/00 |
| Y | | 2,8,9, 11,12, 13 | |
| Y | US-A-2 167 663 (LYFORD) * en entier * | 2,11-13 | |
| Y | US-A-1 711 270 (LITLE) * en entier * | 8,9 | |
| A | US-A-4 020 646 (ODA et al.) * en entier * | 2,3,11 ,15 | **DOMAINES TECHNIQUES RECHERCHES (Int. Cl.4)** |
| A | US-A-2 048 355 (SÄRNMARK) * en entier * | 3,15-17 | F 25 B |
| A | CH-A- 291 622 (BOLINDERS FABRIKS AB) * en entier * | 3,4,15 | |
| A | DE-A-2 414 166 (HÖCKMANN) * en entier * | 2,11 | |

--- -/-

Le présent rapport de recherche a été établi pour toutes les revendications

| Lieu de la recherche LA HAYE | Date d'achèvement de la recherche 05-11-1984 | Examinateur SILVIS H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

Office européen
des brevets

**RAPPORT DE RECHERCHE EUROPEENNE**

0134176
Numéro de la demande

EP 84 40 1658

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 715 819 (ASHBY et al.) * en entier * | 2,11 | |
| A | FR-A-1 127 142 (COMP. FRANCAISE OTHERMO) | | |
| A | FR-A-1 104 328 (TAGLIAZUCCHI) | | |
| A | GB-A- 274 840 (ELECTROLUX LTD.) | | |
| A | GB-A-1 163 199 (KUHLAPPARATE GmbH) | | |
| A | US-A-3 820 356 (STIERLIN) | | DOMAINES TECHNIQUES RECHERCHES (Int. Cl.4) |
| A | US-A-2 452 699 (SUTTON) | | |

-----

Le présent rapport de recherche a été établi pour toutes les revendications

| Lieu de la recherche | Date d'achèvement de la recherche | Examinateur |
|---|---|---|
| LA HAYE | 05-11-1984 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82